# EUROPEAN PATENT SPECIFICATION

(11) **EP 2 611 123 B1**
(45) Date of publication and mention of the grant of the patent: **16.10.2019**
(21) Application number: 11196108.2
(22) Date of filing: 29.12.2011
(51) Int. Cl.: H04M 1/725, G06Q 20/32

(54) **Mobile communications device providing near field communication (NFC) security features and related methods**
Mobile Kommunikationsvorrichtung zur Bereitstellung Nahfeldkommunikationssicherheitsfunktionen und zugehörige Verfahren
Dispositif de communication mobile fournissant des fonctions de sécurité de communications de champ proche et procédés correspondants

(43) Date of publication of application: 03.07.2013
(73) Proprietor: BlackBerry Limited, Waterloo, ON N2K 0A7 (CA)
(72) Inventor: Adams, Neil Patrick, Waterloo, Ontario N2L 3W8 (CA); Singh, Ravi, Mississauga, Ontario L4W 0B5 (CA); Marcovecchio, Vincenzo Kazimierz, Kanata, Ontario K2K 3K1 (CA)
(74) Representative: Bryn-Jacobsen, Caelia

(56) References cited:
- WO-A1-2006/100171
- US-A1- 2009 102 712
- US-A1- 2011 092 185

## Description

### Technical Field

This application relates to the field of communications, and more particularly, to mobile wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable magnetic field induction to enable communication between electronic devices, including mobile communications devices. This short-range high frequency wireless communications technology exchanges data between devices over a short distance, such as only a few centimeters.

US2011/092185 relates to systems and methods for implementing a location token service (LTS) to enhance the security of mobile device identity tokens by using the location of the mobile device to augment the tokens.

WO2006/100171 relates to a near field communication (NFC) device included in a secure transaction card provides an addition and/or transitional communication link for communicating secure transaction information.

US2009/102712 relates to a method for facilitating the detection of misuse of an identity during an electronic transaction.

The present invention is set out in the independent claims, with some optional features set out in the claims dependent thereto.

### Brief Description of the Drawings

FIG. 1 is a schematic block diagram of a communications system in accordance with an example aspect.
FIGS. 2 and 3 are flow diagrams illustrating method aspects associated with the system of FIG. 1.
FIGS. 4 and 5 are front views of an embodiment of the mobile communications device of the system of FIG. 1 illustrating unsecure operating mode security features.
FIG. 6 is a schematic block diagram illustrating example mobile communications device components that may be used with the mobile communications devices shown in FIGS. 1, 4 and 7.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a mobile communications device is provided herein which may include a near field communication (NFC) device, a movement determining device, and a processor coupled with the NFC device and the movement determining device. The processor may be capable of selectively switching between a first operating mode in which the NFC device is enabled for NFC communication and an second operating mode, and when switched to the second operating mode, enabling the NFC device for NFC communication until the mobile communications device moves beyond a threshold distance based upon the movement determining device. Accordingly, when in the second operating mode, NFC communication may advantageously be disabled to help prevent unauthorized NFC communications or transactions in the event the mobile device is stolen, etc.

The processor, when switched to the second operating mode, may be further capable of enabling the NFC device for NFC communication until a number of NFC transactions are performed via the NFC device. Moreover, when switched to the second operating mode, the processor may be further capable of enabling the NFC device for NFC communication until a duration from a time of switching to the second operating mode elapses. Furthermore, the processor may be capable of performing payment transactions via the NFC device, and the processor, when switched to the second operating mode, may be further capable of enabling the NFC device for NFC communication until a payment amount associated with at least one payment transaction performed while in the second operating mode exceeds a payment threshold.

By way of example, the movement determining device may comprise a satellite positioning system device, or a wireless communications device, such as a Bluetooth device or a wireless local area network (WLAN) device. In accordance with another example, the movement determining device may comprise an accelerometer. The mobile communications device may further comprise at least one input device coupled with the processor, and the processor may be capable of selectively switching between the secure operating mode and the second operating mode based upon the at least one input device.

A related communications system and a related communications method for a mobile communications device, such as the one described briefly above, are also provided. The method may include selectively switching the mobile wireless communications device between a first operating mode in which the NFC device is enabled for NFC communication and an second operating mode and, when switched to the second operating mode, enabling the NFC device for NFC communication until the mobile communications device moves beyond a threshold distance based upon the movement determining device.

A related computer-readable medium is for a mobile communications device, such as the one described briefly above. The computer-readable medium may have computer-executable instructions for causing the mobile wireless communications device to perform steps including selectively switching the mobile wireless communications device between a first operating mode in which the NFC device is enabled for NFC communication and an second operating mode and, when switched to the second operating mode, enabling the NFC device for NFC communication until the mobile communications device moves beyond a threshold distance based upon the movement determining device.

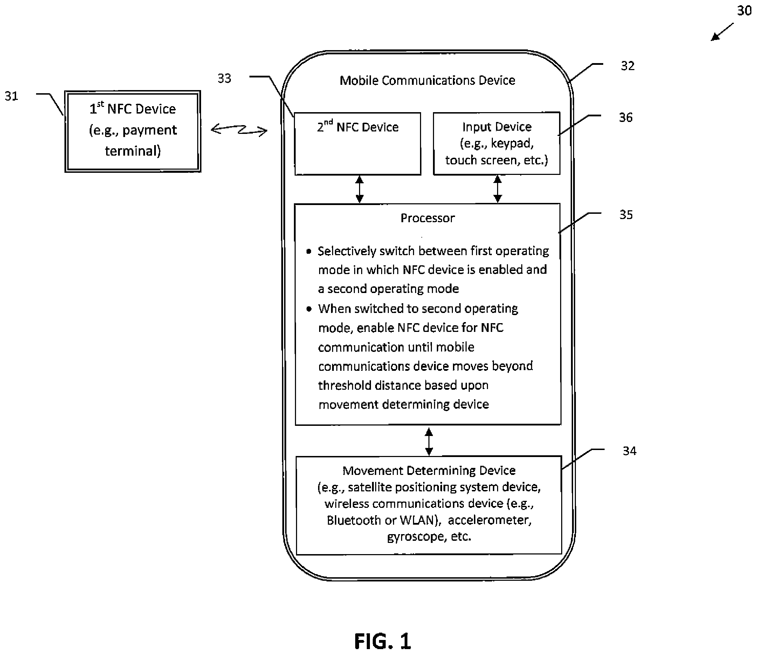

Referring initially to FIG. 1, a communications system **30** and related method aspects are first described. The system **30** illustratively includes a first NFC device **31** and a mobile communications device **32** (also referred to as a "mobile device" herein). The mobile device **32** illustratively includes a second NFC device **33,** a movement determining device **34,** and a processor **35** coupled with the second NFC device and the movement determining device. By way of example, the first NFC device **31** may be incorporated in or associated with a payment terminal (e.g., a point of sale terminal), a security terminal (e.g., a physical access terminal), etc. Example mobile devices **32** may include portable or personal media players (e.g., music or MP3 players, video players, etc.), portable gaming devices, portable or mobile telephones, smartphones, tablet computers, digital cameras, etc. The processor **35** may be implemented using suitable hardware (e.g., a microprocessor, NFC control circuitry, etc.) and a computer-readable medium with computer-executable instructions configured to perform the various operations described herein, for example. By way of example, a mobile wallet may be implemented on the mobile device **32** (e.g., by storing secure applications on a secure element) for causing the first NFC device **31** to initiate or perform the various payment or security operations.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of several centimeters (typically up to about 4 cm, or up to about 10 cm, depending upon the given implementation), but other suitable versions of near field communication which may have different operating frequencies, effective ranges, etc., for example, may also be used.

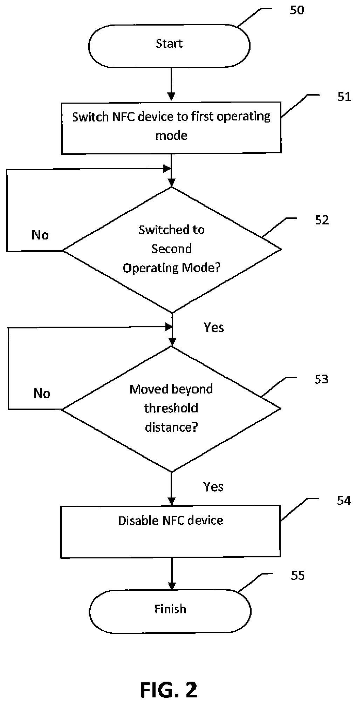

Referring additionally to FIG. 2, beginning at Block **50,** the processor **35** may be configured to selectively switch between a first operating mode in which the second NFC device **33** is enabled for NFC communication, and an second operating mode, at Blocks **51-52.** Generally speaking, the first operating mode may be considered a "secure" operating mode and may be appropriate when the mobile device **32** is within the physical possession of its owner or authorized user. That is, when a mobile device **32** is in the hands of its owner, then it is generally safe to keep the NFC device **33** enabled for NFC communication so that it may readily perform or initiate the requisite payment or security operations.

On the other hand, there may be occasions where, in order to complete a desired NFC transaction (e.g., a payment transaction), the user is required to hand over the mobile device **32** to another person who is otherwise not known to or trusted by the mobile device owner. For example, some drive-through restaurants have outdoor NFC payment terminals to pay for their orders. Yet, if the outdoor payment terminal is not working for some reason, the user may be required to physically hand the mobile device **32** over to the drive-through attendant to swipe the mobile device with another NFC payment terminal inside the restaurant. Similarly, if a NFC payment terminal at a counter within the restaurant is not operational, then the mobile device **32** may need to be handed over to an employee behind the counter to communicate with a different NFC payment terminal. The problem of having to hand over the mobile device **32** may occur in other contexts as well, such as to provide security credentials at a guard station, etc.

Yet, handing over the mobile device **32** to an unknown employee, attendant, teller, etc., may be problematic. This may be particularly so where the mobile device **32** is a multi-use device, such as a PDA or smart phone, which may include other sensitive or personal information (e.g., contacts, emails, pictures, videos, etc.). Beyond potential compromise of such data, another particular concern is that once the mobile device **32** is taken from the user's control or possession, it may be used for making extra purchases, or making a purchase of an unauthorized amount, for example.

Switching the processor **35** to the second or unsecure operating mode may advantageously help avoid unauthorized uses of the mobile device **32** when it is out of the user's possession. That is, when in the unsecure operating mode, the processor **35** enables the second NFC device **33** for NFC communication until the mobile communications device **32** moves beyond a threshold distance based upon the movement determining device **34,** at Block **53,** at which point the NFC device is disabled from further NFC communication or performing further transactions, at Block **54,** which concludes the method illustrated in FIG. 2 (Block **55**)**.**

It should be noted that when in the first operating mode, the processor **35** may enable the second NFC device **33** for communication without the second NFC device being powered on or in an active mode. That is, the processor **35** may be in the secure operating mode (e.g., within the possession of its owner or user), yet still enable the second NFC device **33** for communication when necessary but allow the second NFC device to remain in a power off or low power tag detect state in the interim, for example. Additionally, the second NFC device **33** may be capable of passive mode operation in some embodiments, yet still be enabled for communication by the processor **35** when activated by a field from the first NFC device **31.** Thus, as used herein, "enabled" for communication does not necessarily require that the second NFC device be in a powered or active state.

In one example embodiment the movement determining device **34** may comprise a satellite positioning system device, such as a global positioning system (GPS), GLONASS, Galileo, or other similar global navigation device. Thus, when switched to the unsecure operating mode, the processor **35** may cooperate with the movement determining device **34** to determine an initial location (e.g., latitude and longitude coordinates) of the mobile device **32** and thereafter determine subsequent locations and a distance traveled from the initial location. The initial location may be the location where the mobile device **32** was when the processor **35** switched to the unsecure operating mode, a last known location (e.g., the last position measurement taken before the mobile device **32** was taken inside a building where satellite positioning signals are no longer available), or a next determined location (e.g., when the mobile device **32** exits a building in which the processor **35** was switched to the unsecure operating mode and satellite positioning signals are reacquired).

Accordingly, the processor **35** may thereby determine when the mobile device **32** has been moved over a threshold distance away from the initial location, which may be considered as a theft or unauthorized taking of the mobile device, resulting in the processor disabling or otherwise preventing NFC transactions from being performed via the second NFC device **33.** It may be advantageous to disable the second NFC device **33** at a radio frequency (RF) or hardware level, as this may prevent the second NFC device from being reset via a battery pull, for example, to circumvent the unsecure operating mode, although other suitable approaches for disabling the second NFC device may also be used.

In accordance with another example embodiment, the movement determining device **34** may comprise a wireless communications device, such as a Bluetooth transceiver or a wireless local area network (WLAN) transceiver. For example, the mobile device **32** may be a Bluetooth-enabled mobile device that is linked or paired with a Bluetooth headset, and when the mobile device and headset are out of Bluetooth communication range (or they experience a given degradation in signal strength), then the mobile device may be considered to have moved beyond an acceptable threshold distance, making disabling of the second NFC device **33** appropriate. In the case of a WLAN device, if the mobile device **32** is in a WLAN coverage area when the processor **35** is switched to the unsecure operating mode, then the mobile device may be considered to have traveled beyond the threshold distance when it goes outside of the WLAN coverage area (or the WLAN signal strength degrades past a certain level), for example.

Still another example embodiment is that the movement determining device **34** may comprise at least one of an accelerometer or a gyroscope. Such devices may be used to determine when the mobile device **32** is in motion or traveling, and a given amount of determined motion may be considered as moving the mobile device **32** beyond the movement threshold, for example.

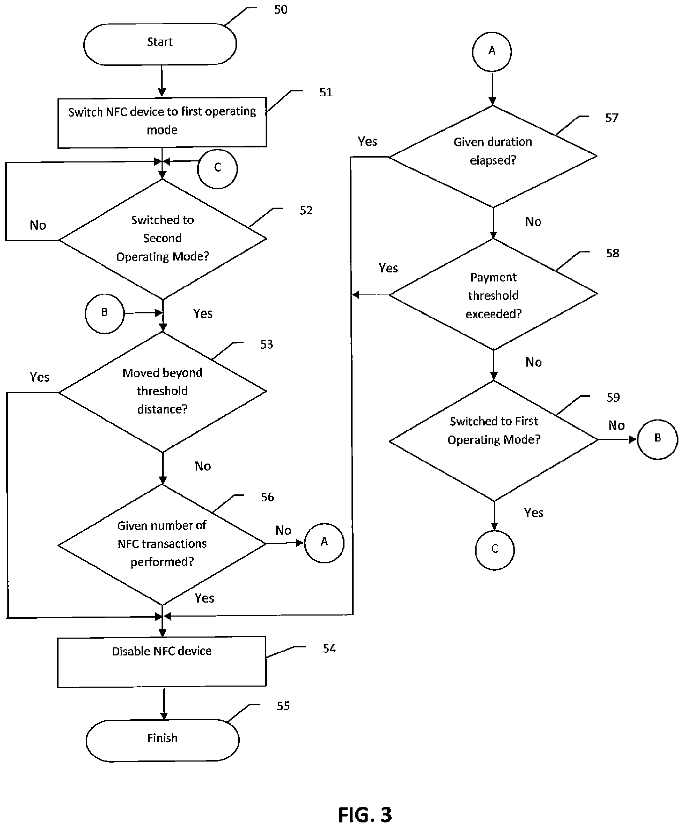

Referring additionally to FIG. 3, other triggering events besides distance may be used to determine when disabling of the NFC device **31** is appropriate in the unsecure operating mode. For example, when switched to the unsecure operating mode, the processor **35** may be further configured to enable the second NFC device **33** for NFC communication until a number of NFC transactions are performed via the second NFC device, at Blocks **54** and **56.** For example, if a designated or given number of transactions are performed, then the processor **35** may disable the second NFC device **33** so that no further NFC transactions may be performed.

Another example triggering event may comprise an elapsed duration from a time of switching to the unsecure operating mode, at Block **57.** For example, if the processor **35** is not returned to the secure operating mode (Block **59**) within a given time, then the second NFC device **33** may be disabled. By way of example, the processor **35** may be switched between the secure operating mode and the unsecure operating mode based upon input provided via one or more input devices **36** (e.g., a keypad, touch screen, convenience key, etc.). In some instances, this may include entering a password, such as to return the processor **35** to the secure operating mode after it has been placed in the unsecure operating mode.

Still another example triggering event may be used in the case where the processor **35** is configured to perform payment transactions via the second NFC device **33.** More particularly, the processor **35,** when switched to the unsecure operating mode, may be further configured to enable the second NFC device **33** for NFC communication until a payment amount associated with at least one financial transaction performed while in the unsecure operating mode exceeds a payment threshold, at Block **58.** Thus, for example, if the amount of money charged for a given payment transaction (or an accumulation of charges for multiple transactions) exceeds the payment threshold, then the second NFC device **33** may be disabled.

In addition, the mobile device **32** may optionally be locked or prevented from performing non-NFC operations when the processor **35** is in the unsecure operating mode. That is, other operations such as placing a telephone call, viewing contacts or emails, etc., may be prohibited by the processor **35** so that this information may be protected or kept private from the person to whom the mobile device **32** has been entrusted. As noted above, once the mobile device **32** is returned to the user, the processor **35** may be returned to the secure operating mode (e.g., by entering a password, biometric, etc.), to thereby once again allow telephone calls, viewing of contacts or emails, etc.

In accordance with another advantageous aspect, the processor **35** may also optionally be configured to perform a wipe of the mobile device **32** if the processor is not returned to the secure operating mode within a set period or time. That is, emails, contacts, call logs, applications, etc., may be wiped or deleted from memory by the processor **35** if the mobile device **32** is not returned to the secure operating mode within the set period of time to help prevent unauthorized access of this information.

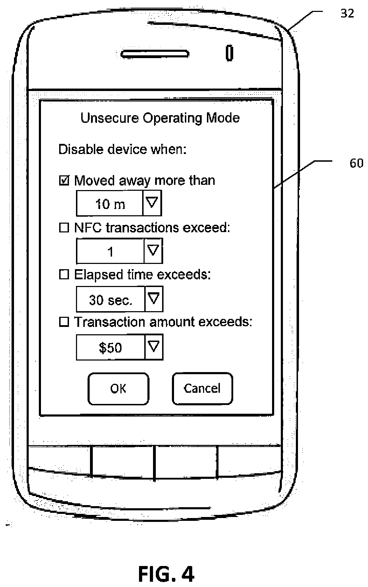

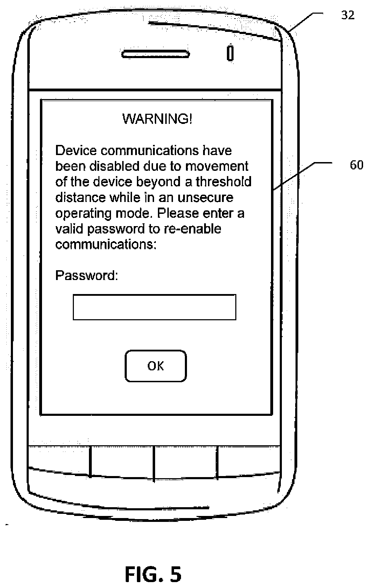

The foregoing will be further understood in the context of an example now described with reference to FIGS. 4 and 5. In the example, the mobile device **32** includes a display **60.** The processor **35** may be prompted to switch to the unsecure operating mode at a time when it is required to hand off the mobile device **32** to perform an NFC transaction (e.g., to an employee at a drive-through restaurant, etc.), as described above. This may be done via a convenience key, an on-screen menu, etc. Once prompted, the processor **35** cooperates with the display **60** to display an options or confirmation screen, in which various configuration options for the unsecure operating mode are provided. Here, the options include the ability to select which of the above-described triggering event or events will be used by the processor **35** to determine when the second NFC device **33** is to be disabled once the unsecure operating mode is entered, including: a threshold distance the mobile device may be moved; a maximum number of NFC transactions to be permitted; how long the second NFC device may remain enabled for NFC communication once the unsecure operating mode is entered or initiated; or a maximum cost or transaction limit.

In the illustrated example, the threshold distance is set to 10 m, the transaction number limit is set to one, the time limit is set to 30 seconds, and the transaction limit is set to $50, although other values may be used (drop down menu boxes are provided on the display **60** in the example embodiment for changing these options). Moreover, in the example embodiment, check boxes are provided to select which of the triggering events to use when in the unsecure operating mode, although other suitable input features (e.g., check boxes, highlighting, etc.) may also be used. That is, one or more of the triggering events may be selected, and in the current example the only selected triggering event is the use of movement beyond the threshold distance. Once the user makes the appropriate selections, selecting an "OK" option causes the processor **35** to switch to the unsecure operating mode. A "cancel" selection may instead be made to exit the options screen, in which case the processor **35** will not enter the unsecure operating mode. Not all of the above-noted triggering events need to be provided as options in all embodiments.

It should be noted that other option screen configurations may be used, and that in some embodiments an options screen need not be used to cause the processor **35** to enter the unsecure operating mode. For example, an options screen, similar to the one shown in FIG. 4, may be initially used to set default or preferred options for the unsecure operating mode (or the default settings may be set by a device manufacturer, a trusted service manager (TSM), etc.), and only a convenience key, a menu item or icon selection, a defined pattern of movement detected by the movement determining device **34,** etc., may be required to relatively quickly initiate the unsecure operating mode. Moreover, in some embodiments, the processor **35** may be configured to automatically switch to the unsecure operating mode, such as based upon a location of the mobile device **32,** an NFC transaction history, etc.

Once a triggering event occurs which causes the processor **35** to disable the second NFC device **33** when in the unsecure operating mode, the processor **35** may cooperate with the display **60** to display a message screen providing a notification that NFC communications (or, more generally, operation of the mobile device **32**) has been disabled until the processor **35** switches back to the secure operating mode (FIG. 5). Switching back to the secure operating mode may be done based upon entering a valid password, as shown.

The above-described approach therefore advantageously helps prevent unauthorized NFC transactions when the mobile device **32** is out of the physical possession of an owner or authorized user. Moreover, it may also advantageously be used to help prevent the theft or loss of other sensitive data (which may or may not be related to NFC transactions) stored on the mobile device **32.** Thus, this may advantageously provide a greater comfort level with performing NFC transactions where passing the mobile device **32** to another is required.

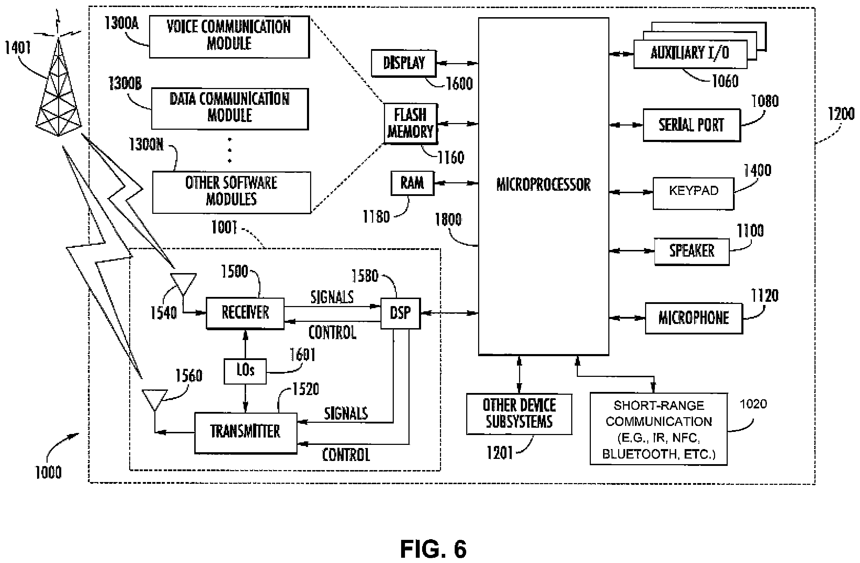

Example components of a mobile communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile communications device (32) comprising:
a near field communication "NFC" device (33);
a movement determining device (34); and
a processor (35) coupled with the NFC device and the movement determining device, the processor (35) being configured for selectively switching between a first operating mode in which the NFC device (33) is enabled for NFC communication, and a second operating mode, and when switched to the second operating mode:
enabling the NFC device (33) for NFC communication until the mobile communications device (30) moves beyond a threshold distance away from an initial location based upon the movement determining device; and disabling the NFC device thereafter.

2. The mobile communications device (30) of Claim 1 wherein the processor (35), when switched to the second operating mode, is further configured for enabling the NFC device (33) for NFC communication until a number of NFC transactions are performed via the NFC device (33).

3. The mobile communications device (30) of Claim 1 wherein the processor (35), when switched to the second operating mode, is further configured for enabling the NFC device (33) for NFC communication until a duration from a time of switching to the second operating mode elapses.

4. The mobile communications device (30) of Claim 1 wherein the processor (35) is further configured for performing payment transactions via the NFC device (33); and wherein the processor (35), when switched to the second operating mode, is further configured for enabling the NFC device (33) for NFC communication until a payment amount associated with at least one payment transaction performed while in the second operating mode exceeds a payment threshold.

5. The mobile communications device (30) of Claim 1 wherein the movement determining device (34) comprises a satellite positioning system device.

6. The mobile communications device (30) of Claim 1 wherein the movement determining device comprises (34) a wireless communications device.

7. The mobile communications device (30) of Claim 6 wherein the wireless communications device comprises at least one of a Bluetooth device or a wireless local area network, WLAN, device.

8. The mobile communications device (30) of Claim 1 wherein the movement determining device (34) comprises an accelerometer.

9. The mobile communications device (30) of Claim 1 further comprising an input device (36) coupled with the processor (35); and wherein the processor (35) is configured to selectively switch between the secure operating mode and the second operating mode based upon the input device (36).

10. A communications method for a mobile communications device (30) comprising a near field communication "NFC" device (33) and a movement determining device (34), the method comprising:
selectively switching the mobile wireless communications device (30) between a first operating mode in which the NFC device (33) is enabled for NFC communication, and an second operating mode; and
when switched to the second operating mode:
enabling the NFC device (33) for NFC communication until the mobile communications device (30) moves beyond a threshold distance away from an initial location based upon the movement determining device; and disabling the NFC device thereafter.

11. The method of Claim 10 further comprising, when the mobile communications device (30) is switched to the second operating mode, enabling the NFC device (33) for NFC communication until a number of NFC transactions are performed via the NFC device (33).

12. The method of Claim 10 further comprising, when the mobile communications device (30) is switched to the second operating mode, enabling the NFC device (33) for NFC communication until a duration from a time of switching to the second operating mode elapses.

13. The method of Claim 10 further comprising, when the mobile communications device (30) is switched to the second operating mode, enabling the NFC device (33) for NFC communication until a payment amount associated with at least one payment transaction performed while in the second operating mode exceeds a payment threshold.

## Patentansprüche

1. Mobile Kommunikationsvorrichtung (32), umfassend: eine Nahfeldkommunikations-Vorrichtung (NFC-Vorrichtung; NFC = Near Field Communication) (33);
eine Bewegungsbestimmungsvorrichtung (34); und
einen Prozessor (35), der mit der NFC-Vorrichtung und der Bewegungsbestimmungsvorrichtung gekoppelt ist, wobei der Prozessor (35) dazu konfiguriert ist, selektiv zwischen einem ersten Betriebsmodus, in dem die NFC-Vorrichtung (33) für die NFC-Kommunikation aktiviert ist, und einem zweiten Betriebsmodus zu schalten, und
wenn in den zweiten Betriebsmodus geschaltet wird:
Aktivieren der NFC-Vorrichtung (33) für die NFC-Kommunikation, bis sich die mobile Kommunikationsvorrichtung (30) basierend auf der Bewegungsbestimmungsvorrichtung über eine Schwellenentfernung von einer Ausgangsposition weg bewegt; und Deaktivieren der NFC-Vorrichtung danach.

2. Die mobile Kommunikationsvorrichtung (30) gemäß Anspruch 1, wobei der Prozessor (35), wenn er in den zweiten Betriebsmodus geschaltet wird, ferner dazu konfiguriert ist, die NFC-Vorrichtung (33) für die NFC-Kommunikation freizugeben, bis eine Anzahl von NFC-Transaktionen über die NFC-Vorrichtung (33) ausgeführt wird.

3. Die mobile Kommunikationsvorrichtung (30) gemäß Anspruch 1, wobei der Prozessor (35), wenn er in den zweiten Betriebsmodus geschaltet wird, ferner dazu konfiguriert ist, die NFC-Vorrichtung (33) für die NFC-Kommunikation freizugeben, bis eine Zeitspanne von einem Zeitpunkt des Umschaltens auf den zweiten Betriebsmodus verstrichen ist.

4. Die mobile Kommunikationsvorrichtung (30) gemäß Anspruch 1, wobei der Prozessor (35) ferner dazu konfiguriert ist, Zahlungsvorgänge über die NFC-Vorrichtung (33) durchzuführen; und wobei der Prozessor (35), wenn er in den zweiten Betriebsmodus geschaltet wird, ferner dazu konfiguriert ist, die NFC-Vorrichtung (33) für die NFC-Kommunikation freizugeben, bis ein Zahlungsbetrag, der mindestens einem Zahlungsvorgang zugeordnet ist, der während des zweiten Betriebsmodus ausgeführt wird, einen Zahlungsschwellenwert überschreitet.

5. Die mobile Kommunikationsvorrichtung (30) gemäß Anspruch 1, wobei die Bewegungsbestimmungsvorrichtung (34) eine Satellitenpositionierungssystem-Vorrichtung umfasst.

6. Die mobile Kommunikationsvorrichtung (30) gemäß Anspruch 1, wobei die Bewegungsbestimmungsvorrichtung (34) eine drahtlose Kommunikationsvorrichtung umfasst.

7. Die mobile Kommunikationsvorrichtung (30) gemäß Anspruch 6, wobei die drahtlose Kommunikationsvorrichtung mindestens eines der folgenden Elemente umfasst: eine Bluetooth-Vorrichtung oder eine drahtloses lokales Netzwerk(WLAN; WLAN = Wireless Local Area Network)-Vorrichtung.

8. Die mobile Kommunikationsvorrichtung (30) gemäß Anspruch 1, wobei die Bewegungsbestimmungsvorrichtung (34) einen Beschleunigungssensor umfasst.

9. Die mobile Kommunikationsvorrichtung (30) gemäß Anspruch 1, die ferner eine mit dem Prozessor (35) gekoppelte Eingabevorrichtung (36) umfasst; und wobei der Prozessor (35) dazu konfiguriert ist, selektiv zwischen dem sicheren Betriebsmodus und dem zweiten Betriebsmodus basierend auf der Eingabevorrichtung (36) zu schalten.

10. Kommunikationsverfahren für eine mobile Kommunikationsvorrichtung (30), die eine Nahfeldkommunikations-Vorrichtung (NFC-Vorrichtung; NFC = Near Field Communication) (33) und eine Bewegungsbestimmungsvorrichtung (34) umfasst, wobei das Verfahren die folgenden Schritte umfasst:
selektives Umschalten der mobilen drahtlosen Kommunikationsvorrichtung (30) zwischen einem ersten Betriebsmodus, in dem die NFC-Vorrichtung (33) für die NFC-Kommunikation aktiviert ist, und einem zweiten Betriebsmodus; und
wenn in den zweiten Betriebsmodus geschaltet wird:
Aktivieren der NFC-Vorrichtung (33) für die NFC-Kommunikation, bis sich die mobile Kommunikationsvorrichtung (30) basierend auf der Bewegungsbestimmungsvorrichtung über eine Schwellenentfernung von einer Ausgangsposition weg bewegt; und Deaktivieren der NFC-Vorrichtung danach.

11. Das Verfahren gemäß Anspruch 10 ferner umfassend, wenn die mobile Kommunikationsvorrichtung (30) in den zweiten Betriebsmodus geschaltet wird, Aktivieren der NFC-Vorrichtung (33) für die NFC-Kommunikation, bis eine Anzahl von NFC-Transaktionen über die NFC-Vorrichtung (33) durchgeführt werden.

12. Das Verfahren gemäß Anspruch 10 ferner umfassend, wenn die mobile Kommunikationsvorrichtung (30) in den zweiten Betriebsmodus geschaltet wird, Aktivieren der NFC-Vorrichtung (33) für die NFC-Kommunikation, bis eine Zeitspanne von einem Zeitpunkt des Umschaltens auf den zweiten Betriebsmodus verstrichen ist.

13. Das Verfahren gemäß Anspruch 10 ferner umfassend, wenn die mobile Kommunikationsvorrichtung (30) in den zweiten Betriebsmodus geschaltet wird, Aktivieren der NFC-Vorrichtung (33) für die NFC-Kommunikation, bis ein Zahlungsbetrag, der mindestens einem Zahlungsvorgang zugeordnet ist, der während des zweiten Betriebsmodus ausgeführt wird, einen Zahlungsschwellenwert überschreitet.

## Revendications

1. Dispositif de communication mobile (32) comprenant :
un dispositif de communication en champ proche « NFC » (33) ;
un dispositif de détermination de mouvement (34) ; et
un processeur (35) couplé au dispositif NFC et au dispositif de détermination de mouvement, le processeur (35) étant configuré pour
commuter sélectivement entre un premier mode de fonctionnement dans lequel le dispositif NFC (33) est activé pour établir une communication NFC, et un deuxième mode de fonctionnement, et
lorsqu'il est commuté vers le deuxième mode de fonctionnement :
activer le dispositif NFC (33) afin d'établir une communication NFC jusqu'à ce que le dispositif de communication mobile (30) se déplace au-delà d'une distance seuil en s'éloignant d'un emplacement initial sur la base du dispositif de détermination de mouvement ; et
désactiver le dispositif NFC par la suite.

2. Dispositif de communication mobile (30) de la revendication 1, dans lequel le processeur (35), lorsqu'il est commuté vers le deuxième mode de fonctionnement, est en outre configuré pour activer le dispositif NFC (33) afin d'établir une communication NFC jusqu'à ce qu'un certain nombre de transactions NFC soient effectuées via le dispositif NFC (33).

3. Dispositif de communication mobile (30) de la revendication 1, dans lequel le processeur (35), lorsqu'il est commuté vers le deuxième mode de fonctionnement, est en outre configuré pour activer le dispositif NFC (33) afin d'établir une communication NFC jusqu'à ce qu'une durée à partir du moment de la commutation vers le deuxième mode de fonctionnement soit écoulée.

4. Dispositif de communication mobile (30) de la revendication 1, dans lequel le processeur (35) est en outre configuré pour effectuer des transactions de paiement via le dispositif NFC (33) ; et dans lequel le processeur (35), lorsqu'il est commuté vers le deuxième mode de fonctionnement, est en outre configuré pour activer le dispositif NFC (33) afin d'établir une communication NFC jusqu'à ce qu'un montant de paiement associé à au moins une transaction de paiement effectuée pendant le deuxième mode de fonctionnement dépasse un seuil de paiement.

5. Dispositif de communication mobile (30) de la revendication 1, dans lequel le dispositif de détermination de mouvement (34) comprend un dispositif de système de positionnement par satellite.

6. Dispositif de communication mobile (30) de la revendication 1, dans lequel le dispositif de détermination de mouvement (34) comprend un dispositif de communication sans fil.

7. Dispositif de communication mobile (30) de la revendication 6, dans lequel le dispositif de communication sans fil comprend au moins l'un d'un dispositif Bluetooth et d'un dispositif de réseau local sans fil, WLAN.

8. Dispositif de communication mobile (30) de la revendication 1, dans lequel le dispositif de détermination de mouvement (34) comprend un accéléromètre.

9. Dispositif de communication mobile (30) de la revendication 1, comprenant en outre un dispositif d'entrée (36) couplé au processeur (35) ; et dans lequel le processeur (35) est configuré pour commuter sélectivement entre le mode de fonctionnement sécurisé et le deuxième mode de fonctionnement sur la base du dispositif d'entrée (36).

10. Procédé de communication pour un dispositif de communication mobile (30) comprenant un dispositif de communication en champ proche « NFC » (33) et un dispositif de détermination de mouvement (34), le procédé comprenant les étapes consistant à :
commuter sélectivement le dispositif de communication sans fil mobile (30) entre un premier mode de fonctionnement dans lequel le dispositif NFC (33) est activé pour établir une communication NFC, et un deuxième mode de fonctionnement ; et
lorsqu'il est commuté vers le deuxième mode de fonctionnement :
activer le dispositif NFC (33) pour établir une communication NFC jusqu'à ce que le dispositif de communication mobile (30) se déplace au-delà d'une distance seuil en s'éloignant d'un emplacement initial sur la base du dispositif de détermination de mouvement ; et
désactiver le dispositif NFC par la suite.

11. Procédé de la revendication 10, comprenant en outre, lorsque le dispositif de communication mobile (30) est commuté vers le deuxième mode de fonctionnement, l'étape consistant à activer le dispositif NFC (33) pour établir une communication NFC jusqu'à ce qu'un certain nombre de transactions NFC soient effectuées via le dispositif NFC (33).

12. Procédé de la revendication 10, comprenant en outre, lorsque le dispositif de communication mobile (30) est commuté vers le deuxième mode de fonctionnement, l'étape consistant à activer le dispositif NFC (33) pour établir une communication NFC jusqu'à ce qu'une durée à partir du moment de la commutation vers le deuxième mode de fonctionnement soit écoulée.

13. Procédé de la revendication 10, comprenant en outre, lorsque le dispositif de communication mobile (30) est commuté vers le deuxième mode de fonctionnement, l'étape consistant à activer le dispositif NFC (33) pour établir une communication NFC jusqu'à ce qu'un montant de paiement associé à au moins une transaction de paiement effectuée pendant le deuxième mode de fonctionnement dépasse un seuil de paiement.
